Europäisches Patentamt

European Patent Office

Office européen des brevets

(19)

(11) Veröffentlichungsnummer : **0 093 884**
**B1**

(12) # EUROPÄISCHE PATENTSCHRIFT

(45) Veröffentlichungstag der Patentschrift :
09.10.85

(21) Anmeldenummer : 83103548.0

(22) Anmeldetag : 13.04.83

(51) Int. Cl.⁴ : **B 23 B 29/034**, B 23 Q 1/26

(54) **Planverstellkopf für eine Zerspanungsmaschine.**

(30) Priorität : 03.05.82 CH 2697/82

(43) Veröffentlichungstag der Anmeldung :
16.11.83 Patentblatt 83/46

(45) Bekanntmachung des Hinweises auf die Patenterteilung : 09.10.85 Patentblatt 85/41

(84) Benannte Vertragsstaaten :
AT CH DE FR GB IT LI SE

(56) Entgegenhaltungen :
GB-A-    4 964
US-A- 3 215 474
US-A- 3 371 559
US-A- 3 715 167

(73) Patentinhaber : **Werkzeugmaschinenfabrik Oerlikon-Bührle AG**
**Birchstrasse 155**
**CH-8050 Zürich (CH)**

(72) Erfinder : **Schultschik, Robert, Dr. Ing.**
**Tägerackerstrasse 33a**
**CH-8610 Uster (CH)**

EP 0 093 884 B1

## Beschreibung

Die Erfindung betrifft einen Planverstellkopf für eine Zerspanungsmaschine, enthaltend einen Spindeleinsatz, einen verstellbaren Planschieber zur Aufnahme eines Werkzeuges, eine Führung mit aufeinander gleitenden Führungsflächen zwischen Spindeleinsatz und Planschieber, eine vorgespannte Feder, angeordnet zum Aufeinanderpressen der Führungsflächen, und Mittel zum Unterbrechen der Übertragung der Vorspannung der Feder auf die Führungsflächen.

Aus der US-PS 3 715 167 ist ein Planverstellkopf gemäss dem Oberbegriff des Patentanspruches 1 bekannt, bei dem zum Unterbrechen der auf den Planschieber einwirkenden Federkraft ein Arbeitstisch mit einem darauf montierten Winkelelement in horizontaler Richtung relativ zu dem in einer Spindel eingesetzten Planverstellkopf bewegt wird, wodurch ein Zahnstangengetriebe einen Stössel gegen die vorgespannte Feder presst und die Pressung der Führungsflächen aufhebt. Die Positionierung des Werkzeuges erfolgt durch eine zusätzliche vertikale Krafteinwirkung zwischen Werktisch und Spindel.

Bei einem solchen Planverstellkopf ist die Genauigkeit der Positionierung in Frage gestellt durch das, bei unterbrochener Übertragung der Vorspannung der Feder auf die Führungsflächen, an der Führung auftretende Spiel und durch die radialen Krafteinwirkungen zwischen Werktisch und Spindel.

Die Erfindung, wie sie im Anspruch 1 gekennzeichnet ist, löst die Aufgabe, einen Planverstellkopf zu schaffen, mit dem eine hohe Präzision der Positionierung des Planschiebers bzw. des Werkzeuges gewährleistet ist.

Die durch die Erfindung erreichten Vorteile sind darin zu sehen, dass die Positionierung des Planschiebers spielfrei erfolgt. Weiter sind die Mittel zum Unterbrechen der Übertragung der Vorspannung der Feder auf die Führungsflächen wesentlich vereinfacht ausgebildet. Die besondere Art der Planschieberklemmung erlaubt ferner auch ein automatisches Lösen der Klemmung und somit den Einsatz des erfindungsgemässen Planschiebers in einer Anordnung zur automatischen Verstellung der Radialposition eines Planschiebers eines Planverstellkopfes an einer Zerspanungsmaschine.

Im folgenden wird die Erfindung anhand von, einen Ausführungsweg darstellenden Zeichnungen näher erläutert. Es zeigt :

Figur 1 einen Planverstellkopf teilweise im Schnitt

Figur 2 einen Teil eines Planverstellkopfes gemäss Fig. 1.

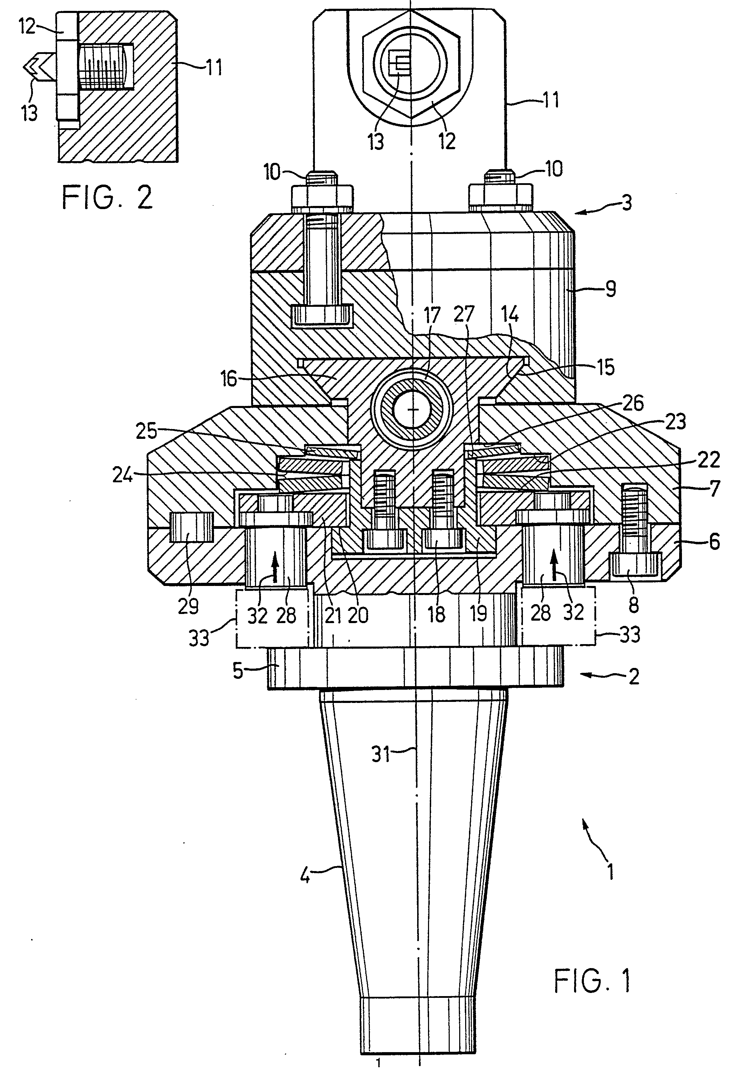

Fig. 1 zeigt einen Planverstellkopf 1 teilweise im Schnitt. Daran unterscheidet man einen Spindeleinsatz 2 und einen Planschieber 3. Der Spindeleinsatz 2 weist einen Konus 4 auf, welcher in an sich bekannte Werkzeugaufnahmevorrichtungen von Spindeln einschiebbar ist. Am einen Ende des Konus 4 ist ein Bund 5 angeordnet. In einem Abstand zum Bund 5 ist ein Flansch 6 vorgesehen. Dieser ist über Schrauben 8 mit einem Gehäuse 7 verschraubt. Ueber dem Gehäuse 7 erkennt man ferner einen Schieber 9, der über Schrauben 10 mit einem Werkzeugträger 11 verbunden ist. Im Werkzeugträger 11 ist in einem einschraubbaren Werkzeugeinsatz 12 ein Schneidwerkzeug 13 angeordnet.

Der Schieber 9 weist Führungsflächen 14 auf, die sich auf entsprechenden Führungsflächen 15 eines Führungselementes 16 abstützen. Im Führungselement 16 ist eine Spindel 17 vorgesehen, die mit ihren Enden in nicht näher dargestellter, aber bekannter Art im Gehäuse 7 gelagert ist. Ein hier ebenfalls nicht dargestellter Mitnehmer kämmt mit dem Gewinde der Spindel 17 und verbindet diese mit dem Schieber 9 durch das Führungselement 16 hindurch. Das Führungselement 16 ist weiter über Schrauben 18 mit einem Flanschteil 19 verschraubt. Der Flanschteil 19 ist über eine Berührungsfläche 20 in formschlüssiger Verbindung mit einem Ringkörper 21, der den Flanschteil 19 umschliesst. Zwischen einer Deckfläche 22 des Ringkörpers 21 und einer Innenfläche 23 am Gehäuse 7 sind Tellerfedern 24 mit Vorspannung angeordnet. Eine weitere Tellerfeder 25, die eine kleinere Federkonstante aufweist als die Tellerfedern 24, stützt sich einerseits auf einer weiteren Innenfläche 26 am Gehäuse 7 und andererseits auf einer Stirnfläche 27 am Flanschteil 19 ebenfalls mit allerdings geringer Vorspannung ab. Bolzen 28 stützen sich an einem Ende am Ringkörper 21 ab und ragen am anderen Ende über den Flansch 6 hinaus. Da der Planverstellkopf 1 im Einsatz sich dreht, ist auch eine Spindelachse 31 eingezeichnet. Ein Stift 29 dient der genauen Positionierung von Gehäuse 7 und Flansch 6 aufeinander.

Fig. 2 zeigt einen Teil des Werkzeugträgers 11 in Ansicht. Dabei erkennt man wiederum den Werkzeugeinsatz 12 und ein Schneidwerkzeug 13.

Durch die Vorspannung der Tellerfedern 24 wird der Ringkörper 21 vom Gehäuse 7 weiter weggedrückt. Dieser Ringkörper 21 überträgt die Vorspannung über die Berührungsfläche 20 auf den Flanschteil 19 und somit auch auf das Führungselement 16. Durch die Vorspannung der Tellerfedern 24 werden also das Gehäuse 7, der Schieber 9, das Führungselement 16 mit dem Flanschteil 19 und der Ringkörper 21, sowie die Führungsflächen 14 und 15, aneinandergepresst.

Durch Anheben der Bolzen 28 in Richtung eines Pfeiles 32 wird auch der Ringkörper 21 angehoben, so dass die Tellerfedern 24 weiter komprimiert werden. Die Tellerfeder 25 drückt aber den Flanschteil 19 mit dem Führungselement 16 weiterhin von der Innenfläche 26 weg. Der Ringkörper 21 und der Flanschteil 19 berühren sich nun an der Berührungsfläche 20 nicht mehr. Somit sind die Führungsflächen 14 und 15 nicht mehr mit der Vorspannung der Tellerfedern 24 belastet. Diese werden nur noch durch die geringe Vorspannung der Tellerfeder 25 aneinandergepresst, so dass gerade kein Spiel entsteht. In dieser Stellung kann nun der Planschieber 3 durch Drehen der Spindel 17 gegenüber dem Gehäuse 7 leicht verschoben werden. Die Bolzen 28 stellen zusammen mit dem Ringkörper 21 Mittel zu Unterbrechen der Uebertragung der Vorspannung auf die Führungsflächen 14 und 15 dar. Durch Loslassen der Bolzen 28 kehren alle Teile wieder in ihre alte Stellung zurück und der Planschieber 3 ist auf dem Gehäuse 7 festgeklemmt. Das Anheben des Bolzens 28 in Richtung des Pfeiles 32 erfolgt vorzugsweise mit einer hier strichpunktiert und im Schnitt eingezeichneten Keilgabel 33. Diese ist an der Zerspanungsmaschine angeordnet und wird quer zur Spindelachse 31 zwischen den Bolzen 28 und dem Bund 5 eingeschoben. Durch die keilförmige Ausbildung der Keilgabel 33 werden die Bolzen 28 in Richtung des Pfeiles 32 verschoben, wenn diese eingeschoben wird. Die Keilgabel 33 vervollständigt die obengenannten Mittel zum Unterbrechen der Vorspannung.

## Patentansprüche

1. Planverstellkopf für eine Zerspanungsmaschine, enthaltend einen Spindeleinsatz (2), einen verstellbaren Planschieber (3) zur Aufnahme eines Werkzeuges (13), eine Führung mit aufeinander gleitenden Führungsflächen (14, 15) zwischen Spindeleinsatz (2) und Planschieber (3), einer vorgespannte Feder (24), angeordnet zum Aufeinanderpressen der Führungsflächen (14, 15), und Mittel (28, 21) zum Unterbrechen der Übertragung der Vorspannung der Feder (24) auf die Führungsflächen (14, 15), gekennzeichnet durch eine zweite vorgespannte Feder (25), angeordnet zum dauernden Übertragen deren Vorspannung auf die Führungsflächen (14, 15).

2. Planverstellkopf gemäss Anspruch 1, dadurch gekennzeichnet, dass die zweite Feder (25) eine kleinere Federkonstante aufweist als die erste Feder (24).

3. Planverstellkopf gemäss Anspruch 1 oder 2, dadurch gekennzeichnet, dass als Federn (24, 25) Tellerfedern vorgesehen sind, die konzentrisch zu einer Spindelachse (31) angeordnet sind.

4. Planverstellkopf gemäss Anspruch 1, dadurch gekennzeichnet, dass als Mittel zur Unterbrechung der Übertragung der Vorspannung der ersten Feder (24) Bolzen (28) sowie ein Ringkörper (21) vorgesehen sind.

5. Planverstellkopf gemäss Anspruch 4, dadurch gekennzeichnet, dass der Spindeleinsatz (2) einen zu einer Spindelachse (31) konzentrischen Ring (5) aufweist, der in einem axialen Abstand zu einem Flansch (6) angeordnet ist.

6. Planverstellkopf gemäss Anspruch 1, dadurch gekennzeichnet, dass ein Führungselement (16) mit Führungsflächen (15) federbelastet und in Richtung einer Spindelachse (31) bewegbar angeordnet ist.

7. Planverstellkopf gemäss Anspruch 6, dadurch gekennzeichnet, dass eine Spindel (17) das Führungselement (16) durchquert.

## Claims

1. Radially adjustable tool head for a cutting machine, comprising a spindle insert (2), an adjustable slide (3) for accomodating a tool (13), quiding means arranged between spindle insert (2) and slide (3) and containing guiding surfaces (14, 15) which slide upon one another, a spring (24), loaded with a pre-bias and arranged to press the guiding surfaces (14, 15) against each other, and means (28, 21) for interrupting the transmission of the spring pre-bias to the guiding surfaces (14, 15), characterised by a second spring (25) loaded with a pre-bias and arranged for permanent transmission of the spring pre-bias to the guiding surfaces (14, 15).

2. Radially adjustable tool head as claimed in claim 1, characterised in that the second spring (25) comprises a lower spring constant than the first spring (24).

3. Radially adjustable tool head as claimed in claim 1 or 2, characterised in that the springs (24, 25) comprise plate springs arranged concentrically with respect to a spindle axis (31).

4. Radially adjustable tool head as claimed in claim 1, characterised in that said interrupting means of the transmission of the pre-bias of the first spring (24) comprises bolt means (28) and a ring member (21).

5. Radially adjustable tool head as claimed in claim 4, characterised in that the spindle insert (2) contains a collar member (5) arranged concentrically with respect to the spindle axis (31) and arranged at an axial distance from a flange member (6).

6. Radially adjustable tool head as claimed in claim 1, characterised in that a guiding element (16) containing guiding surfaces (15) being arranged to be spring-loaded and to be movable in the direction of the spindle-axis (31).

7. Radially adjustable tool head as claimed in claim 6, characterised in that a spindle (17) is traversing the guiding element (16).

## Revendications

1. Tête à surfacer pour machine à usiner par enlèvement de copeaux comportant une garniture de broche (2), un chariot transversal, réglable (3) pour recevoir un outil (13), un moyen de guidage pour des surfaces de guidages (14, 15), glissant l'une sur l'autre, entre la garniture de broche (2) et le chariot transversal (3), un ressort précontraint (24) destiné à comprimer les surfaces de guidage (14, 15) et des moyens pour interrompre la transmission de la précontrainte du ressort (24) et surfaces de guidage (14, 15), caractérisée par un second ressort précontraint (25) prévu pour transmettre en permanence la précontrainte aux surfaces de guidage (14, 15).

2. Tête à surfacer selon la revendication 1, caractérisée en ce que le second ressort (25) présente une constante de ressort plus faible que celle du premier ressort (24).

3. Tête à surfacer selon l'une quelconque des revendications 1 ou 2, caractérisée en ce que les ressorts (24, 25) sont des ressorts belleville montés concentriquement à l'axe (31) de la broche.

4. Tête à surfacer selon la revendication 1, caractérisée par des moyens pour interrompre la transmission de la précontrainte du premier ressort (24), des goujons (28) et d'un corps annulaire (21).

5. Tête à surfacer selon la revendication 4, caractérisée en ce que la garniture de broche (2) comporte une bague (5) concentrique à un axe de broche (31), et qui est prévue à une certaine distance axiale d'une bride (6).

6. Tête à surfacer selon la revendication 1, caractérisée par un élément de guidage (16) avec des surfaces de guidage (15) chargé par ressort et mobile en direction de l'axe de la broche (31).

7. Tête à surfacer selon la revendication 6, caractérisée en ce qu'une broche (17) traverse l'élément de guidage (16).

**0 093 884**

FIG. 2

FIG. 1